## Europäisches Patentamt

## European Patent Office

## Office européen des brevets

(19)

(11) Veröffentlichungsnummer: **0 046 862**
**B1**

(12)

# EUROPÄISCHE PATENTSCHRIFT

(45) Veröffentlichungstag der Patentschrift:
27.03.85

(51) Int. Cl.⁴: **C 08 G 81/02**, C 08 F 297/04

(21) Anmeldenummer: 81105563.1

(22) Anmeldetag: 15.07.81

(54) Verfahren zur Herstellung von verzweigten Blockcopolymerisaten und Verwendung derselben.

(30) Priorität: 30.08.80 DE 3032832

(43) Veröffentlichungstag der Anmeldung:
10.03.82 Patentblatt 82/10

(45) Bekanntmachung des Hinweises auf die Patenterteilung:
27.03.85 Patentblatt 85/13

(84) Benannte Vertragsstaaten:
**BE DE FR GB IT NL SE**

(56) Entgegenhaltungen:
**DE - A - 2 550 227**
**DE - A - 2 610 069**
**US - A - 3 465 065**
**US - A - 4 232 137**

(73) Patentinhaber: **BASF Aktiengesellschaft,
Carl-Bosch-Strasse 38, D-6700 Ludwigshafen (DE)**

(72) Erfinder: **Heinz, Gerhard, Dr., Im Vogelsang 2,
D-6719 Weisenheim (DE)**
Erfinder: **Schmitt, Burghard, Dr., Hermannstrasse 3,
D-6520 Worms (DE)**
Erfinder: **Dorn, Ingo H, Dr., Gartenstrasse 7,
D-6701 Dannstadt-Schauernheim (DE)**
Erfinder: **Gausepohl, Hermann, Dr., Neuweg 10,
D-6704 Mutterstadt (DE)**
Erfinder: **Gerberding, Karl, Dr., In der Dreispitz 9,
D-6706 Wachenheim (DE)**
Erfinder: **Jung, Rudolf H., Dr., Liebenauer Strasse 132,
D-6520 Worms (DE)**
Erfinder: **Mittnacht, Hans, Dr., Zinkgraefstrasse 44,
D-6940 Weinheim (DE)**
Erfinder: **Pohrt, Juergen, Renchener Strasse 7,
D-6800 Mannheim (DE)**
Erfinder: **Wittmer, Paul, Dr., Ostring 29, D-6740 Landau
(DE)**

## Beschreibung

Die Erfindung betrifft ein Verfahren zur Herstellung von verzweigten Blockcopolymerisaten aus 60 bis 95 Gew.-% eines monovinylaromatischen Monomeren und 40 bis 5 Gew.-% eines konjugierten Diens durch Polymerisation der Monomeren in einem inerten Lösungsmittel in Gegenwart eines Monolithiumkohlenwasserstoffes als Initiator unter stufenweise Monomeren- und Initiatorzugabe und anschließender Kupplung der erhaltenen lebenden linearen Blockcopolymerisate mit einem polyfunktionellen Kupplungsmittel.

Zum Stand der Technik nennen wir

(1) DE-OS 2 550 226
(2) DE-OS 2 550 227

Aus (1) bzw. (2) ist die Herstellung verzweigter Blockcopolymerisate mit sogenannter polymodaler Verteilung bekannt. Die nach den bekannten Verfahren erhaltenen Produkte besitzen gegenüber reinem Polystyrol bzw. Mischungen von Polystyrol mit linearen Blockcopolymerisaten eine höhere Transparenz und bessere mechanische Eigenschaften. Sie sind insbesondere hinsichtlich ihrer Schlagzähigkeit und Streckspannung den aus der DE-OS 1 959 922 bekannten Produkten überlegen. Aufgabe der vorliegenden Erfindung war die Verbesserung von Transparenz und Zähigkeit der aus (1) bzw. (2) bekannten Produkte. Beide Eigenschaften werden durch Abbruchreaktion während der Polymerisation, die zu Homopolystyrol und ungekoppeltem Zweiblockpolymerisaten führen, beeinträchtigt. Der Abbruch wirkt sich besonders nachteilig auf die Transparenz von Mischungen aus Standardpolystyrol und von nach (1) bzw. (2) erhaltenen Produkten aus.

Es bestand daher die Aufgabe, die vorstehend geschilderten Nachteile bei den bekannten Produkten zu beheben.

Die Lösung dieser Aufgabe gelingt durch Einhaltung der im kennzeichnenden Teil des Patentanspruchs 1 genannten Maßnahmen.

Durch Einhaltung des im kennzeichnenden Teil von Patentanspruch 1 beschriebenen Temperaturprofils kann der Homopolystyrolanteil deutlich vermindert und die Kopplungsausbeute erhöht werden. Die Verwendung von unverdünntem Kopplungsmittel führt darüber hinaus zu einer weiteren Erhöhung der Kopplungsausbeute und damit zu einer weiteren Verbesserung der Zähigkeit. Die nach dem erfindungsgemäßen Verfahren hergestellte Produkte zeigen somit gegenüber den aus (1) und (2) bekannten Produkten eine verbesserte Verarbeitungsstabilität und Temperaturbeständigkeit. Die Verarbeitungsbreite und die obere Molekulargewichtsgrenze von Polystyrol als Mischkomponente unter Erhaltung der Transparenz ist angehoben. Ferner zeigen Fertigteile beim Tempern keine Trübung. Durch Zumischen von Schmiermitteln kann die Oberflächenqualität von extrudierten Folien weiter verbessert werden.

Monovinylaromatische Monomere, die für das erfindungsgemäße Verfahren in Betracht kommen, sind beispielsweise Styrol, die Seitenketten alkylierten Styrole, wie $\alpha$-Methylstyrol und die kernsubstituierten Styrole, wie Vinyltoluol oder Ethylvinylbenzol. Die monovinylaromatischen Monomeren können dabei alleine oder in Mischung miteinander eingesetzt werden. Vorzugsweise wird Styrol allein verwendet.

Beispiele für konjugierte Diene, die nach dem erfindungsgemäßen Verfahren allein oder in Mischung miteinander für die Herstellung der verzweigten Blockcopolymerisate herangezogen werden können, sind Butadien, Isopren, sowie 2,3-Dimethylbutadien. Besonders bevorzugt sind Butadien und Isopren, von beiden wird wiederum Butadien bevorzugt.

Die nach dem erfindungsgemäßen Verfahren hergestellten verzweigten Blockcopolymerisate sollen insgesamt 60 bis 95 Gew.-%, insbesondere 70 bis 90 Gew.-% der monovinylaromatischen Monomeren und 40 bis 5 Gew.-%, vorzugsweise 30 bis 10 Gew.-% eines konjugierten Diens, jeweils bezogen auf die insgesamt eingesetzten Monomeren einpolymerisiert enthalten. Das Molekulargewicht der verzweigten Blockcopolymerisate soll in der Regel im Bereich von 100 000 bis 1 000 000 liegen und beträgt vorzugsweise 150 000 bis 500 000.

Das erfindungsgemäße Verfahren wird durch aufeinanderfolgende Polymerisation der Monomeren-Lösung in Gegenwart eines Monolithium-Kohlenwasserstoffs als Initiator unter stufenweiser Monomer- und Initiatorzugabe und unter anschließender Kopplung der erhaltenen lebenden Blockcopolymerisate mit einer polyfunktionellen, reaktionsfähigen Verbindung wie folgt durchgeführt:

In der ersten Verfahrensstufe (a) wird zunächst ein nichtelastomeres Polymersegment hergestellt, in dem man einen wesentlichen Teil der Gesamtmenge des monovinylaromatischen Monomeren mittels einer relativ kleinen Menge des Monolithium-Kohlenwasserstoff-Initiators in einem inerten Lösungsmittel unter den nachstehend noch beschriebenen Bedingungen polymerisiert.

Es sollen hierzu 50 bis 80, gegebenenfalls bis zu 90 Gew.-% der Gesamtmenge der monovinylaromatischen Monomeren verwendet werden. In der Verfahrensstufe (a) werden 0,1 bis 10 mMol/Mol des in der ersten Verfahrensstufe eingesetzten monovinylaromatischen Monomeren angewendet.

Als Initiator dienen die bekannten Monolithium-Kohlenwasserstoffe der allgemeinen Formel RLi, worin R einen aliphatischen, cyclo-aliphatischen, aromatischen oder gemischt aliphatisch-aromatischen Kohlenwasserstoffrest darstellt. Vorzugsweise werden Monolithium-Alkylverbindungen mit 2 bis 6 Kohlenstoffatomen in der Alkylgruppe eingesetzt, wovon n-Butyllithium und sec.-Butyllithium besonders bevorzugt sind.

Geeignete Kohlenwasserstofflösungsmittel sind aliphatische, cycloaliphatische oder aromatische Kohlenwasserstoffe, die unter Reaktionsbedingungen flüssig sind und vorzugsweise 4 bis 12 Kohlenstoffatome enthalten. Es kommen beispielsweise in Betracht Isobutan, n-Pentan, Isooctancyclopentan, Cyclohexan, Cycloheptan, Benzol-Toluol, Xylol und andere. Es können auch Gemische dieser Lösungsmittel eingesetzt werden. Es ist ferner möglich, die Polymerisation in Gegenwart geringer Mengen an Ethern, wie Tetrahydrofuran und dergleichen durchzuführen, wobei in bekannter Weise die Polymerisationsgeschwindigkeit, die Konfiguration der Butadienpolymerisat-Segmente, sowie auch der Übergang zwischen den Segmenten der unterschiedlichen Monomeren beeinflußt werden kann. Vorzugsweise wird jedoch ohne Etherzusatz gearbeitet. Die Konzentration der Monomeren der Reaktionslösung ist nicht kritisch und kann so eingestellt werden, daß jede gewünschte Vorrichtung für die Polymerisation verwendet werden kann. Üblicherweise wird in 10- bis 30%igen Lösungen der inerten Lösungsmittel polymerisiert.

Die Polymerisation erfolgt dabei unter den für die anionische Polymerisation mit lithiumorganischen Verbindungen üblichen Bedingungen, wie Inertgasatmosphäre und Feuchtigkeitsausschluß. Zur Herstellung wasserfreier Verhältnisse wird zunächst mit lithiumorganischer Verbindung austitriert.

Wesentlich bei der Durchführung der Verfahrensstufe (a) ist, daß in der Zeit bis zu der zweiten Initiatorzugabe ein bestimmtes Temperaturprofil eingehalten wird. Dies kann zum Beispiel dadurch erreicht werden, daß man bei einer bestimmten Temperatur, die im Bereich von 30 bis 40°C liegt, mit der Polymerisation beginnt und die anfallende Reaktionswärme unter Verwendung eines Siedekühlers und unter gleichzeitiger Monomerenzugabe im Zulauf abführt und somit im Temperaturbereich von unterhalb 80°C, insbesondere im Bereich zwischen 45 und 70°C hält. Der Fachmann kann dabei aufgrund der zu erwartenden Reaktionswärme das Verhältnis der in der Vorlage und im Zulauf anzuwendenden vinylaromatischen Monomeren in der Verfahrensstufe (a) ohne weiteres berechnen. Bei Wahl des Beginns der Polymerisation im Bereich von 30 bis 40°C können z. B. 30 bis 70 Gew.-% der in der Verfahrensstufe (a) insgesamt umzusetzenden vinylaromatischen Monomeren als Vorlage vorgegeben werden, der Rest, nämlich ein Anteil von 70 bis 30 Gew.-%, kann während der Polymerisation in der Verfahrenssstufe (a) zugegeben werden. Besonders bevorzugt wird die Monomerenzugabe bei vorgegebener Rückflußkühlung so eingeregelt, daß eine Temperatur im Bereich zwischen 45 und 70°C eingestellt wird.

Nach Beendigung der Zugabe des vinylaromatischen Monomeren wird die Polymerisationstemperatur mit Hilfe der Siedekühlung zunächst erniedrigt auf Werte im Bereich von 30 bis 40°C, bevor die zweite Initiatorzugabe erfolgt. Diese ist Voraussetzung für die Durchführung der Verfahrenssstufe (b) oder der unter Auslassung der Verfahrenssstufe (b) anschließenden Verfahrenssstufe (c).

Die Polymerisation in der ersten Verfahrensstufe (a) wird bis zur praktisch vollständigen Umsetzung des angewendeten monovinylaromatischen Monomeren geführt. Man erhält dabei eine Lösung von nichtelastomeren, lebenden Polymeren aus den monovinylaromatischen Monomeren, d. h. ein Polymersegment mit aktiven endständigen Lithiumkohlenstoffbindungen, welche zur weiteren Anlagerung von Monomeren fähig sind.

In der zweiten Verfahrenssstufe (b) wird, falls diese durchgeführt wird, zu der in der Verfahrensstufe (a) erhaltenen Lösung eine weitere Menge an frischem Initiator zugegeben. Diese Menge soll dabei mindestens gleich groß oder größer sein als die ursprüngliche Initiatormenge, die in der ersten Verfahrensstufe (a) der Polymerisation eingesetzt worden ist. Vorzugsweise wird in der zweiten Verfahrensstufe das 1- bis 15fache und insbesondere das 1- bis 10fache der ursprünglich eingesetzten Initiatormenge an weiterem Initiator zugesetzt.

Nach Zugabe des Initiators können in dieser Verfahrensstufe ggf. 1 bis 30 Gew.-%, vorzugsweise 5 bis 20 Gew.-%, der Gesamtmenge der für die Herstellung der für das erfindungsgemäße Verfahren verwendeten monovinylaromatischen Monomeren zugesetzt werden. Die Summe der in der ersten und ggf. in der zweiten Verfahrensstufe eingesetzten Menge an monovinylaromatischen Monomeren soll dabei jedoch höchstens 90 Gew.-% der Gesamtmenge der monovinylaromatischen Monomeren betragen. Falls in der zweiten Verfahrensstufe eine weitere Menge an monovinylaromatische Verbindung zugegeben wird, so wird in der vorstehend beschriebenen Weise [vergleiche Verfahrensstufe (a)] ein Temperaturprofil durch Rückflußkühlung und Aufteilung der berechneten Monomerenmenge in Vorlage und Zulauf aufrecht erhalten. In der Verfahrensstufe (b) werden somit die gleichen Bedingungen bezüglich der Wärmeabfuhr wie in der Verfahrensstufe (a) angewendet. Am Ende der Verfahrensstufe (b) erfolgt wiederum durch Benutzung der Rückflußkühlung eine Absenkung der Polymerisationstemperatur auf einen Wert im Bereich von 30 bis 40°C. (Wird jedoch nach Zugabe des Initiators in der Verfahrenssstufe (b) keine weitere Menge an vinylaromatischen Monomeren zugegeben, so kann unmittelbar daran die nachstehend unter (c) beschriebene Verfahrensstufe angeschlossen werden.) In der Verfahrensstufe (b) wird, ebenso wie in der ersten Verfahrensstufe (a), bis zum praktisch vollständigen Umsatz der ggf. zugegebenen monovinylaromatischen Monomeren polymerisiert. Es werden dabei zusätzlich zu der in der ersten Verfahrensstufe an die gebildeten Polymersegmente angelagerten Ketten auch noch neue Ketten von lebenden Polymeren gebildet (polymodaler Aufbau).

In einer weiteren Verfahrensstufe (c) werden an die aktiven Kettenenden Dien enthaltende Polymersegmente anpolymerisiert. Hierbei ist zu beachten, daß bei der Polymerisation der noch vorhandenen restlichen monovinylaromatischen Monomeren und der Gesamtmenge des konjugierten Diens die Polymerisationstemperatur 110° C nicht überschreiten sollte. Die Polymerisationswärme fällt innerhalb kurzer Zeit an, so daß durch geeignete Maßnahmen verhindert werden muß, daß das vorgegebene Limit von 110° C nicht überschritten wird. Die Temperatur bewegt sich am Ende der letzten Verfahrensstufe (vor der Kopplung) zwischen 90 und 110° C. Eine dieser Maßnahmen besteht darin, vor Beginn der Verfahrensstufe (c) die Temperatur durch Einschaltung der Rückflußkühlung in der Verfahrensstufe (b) bzw. (a) genügend tief abzusenken. Eine weitere Maßnahme kann darin bestehen, einen Teil des Butadiens im Zulauf zuzugeben und danach die restlichen Monomeren, d. h. eine Mischung aus Dien und vinylaromatischen Monomeren als Mischung als Ganzes auf einmal in den Reaktionseinsatz zu geben. Um die erwünschte Struktur zu erhalten, ist es erforderlich, daß ein überwiegender Teil der in der Verfahrensstufe (c) anzupolymerisierenden Monomeren als Mischung aus Dien und vinylaromatischen Monomeren dem Polymerisationsansatz direkt zugegeben wird. In der Verfahrensstufe (c) wird die Gesamtmenge an konjugiertem Dien, d. h. 5 bis 40 Gew.-% der insgesamt einzusetzenden Monomeren angewendet. Die Menge an einzusetzenden vinylaromatischen Monomeren ist etwas davon abhängig, wieviel des Monomeren in der ggf. durchgeführten zweiten Verfahrensstufe (b) angewendet worden sind.

Nach Auspolymerisation der Monomeren bzw. Monomerenmischung der letzten Verfahrensstufe (c) liegt in der Reaktionslösung ein Gemisch aus lebenden linearen Blockcopolymerisaten mit reaktionsfähigem Lithiumstyryl-Kohlenstoffbindungen vor.

Das Gemisch dieser lebenden, linearen Blockcopolymerisate wird nun in einem weiteren Verfahrensschritt unter Zugabe einer polyfunktionellen reaktiven Verbindung als Kopplungsmittel umgesetzt. Für das erfindungsgemäße Verfahren kommen mindestens tri-funktionelle Kopplungsmittel in Betracht. Es seien beispielsweise genannt die Polyepoxide, wie epoxidiertes Leinsamenöl, Polyisocyanate, beispielsweise Benzo-1,2,4-Triisocyanat, cyclische Anhydride, Polyketone oder Polyhalogenide. Ebenso können auch Dicarbonsäureester, z. B. Diäthyladipat, oder Maleinsäureanhydrid als Kopplungsmittel verwendet werden. Eine weitere Gruppe von Kopplungsmittel sind die Siliciumpolyhalogenide. Ferner können polyfunktionelle Kopplungsmittel auf Basis von Divinylbenzol eingesetzt werden. Besonders bevorzugt wird epoxidiertes Leinsamenöl als Kopplungsmittel angewendet.

Die Kopplung der lebenden linearen Blockcopolymerisate mit den polyfunktionellen Kopplungsmitteln findet in einem engen Temperaturintervall im Bereich zwischen 90 und 110° C statt. Es ist erforderlich, die genannte obere Temperaturgrenze nicht zu überschreiten, da damit eine Ausbeuteverminderung einhergeht. Besonders bevorzugt werden flüssige Kopplungsmittel, die mindestens trifunktionell sind und unter Kopplungsbedingungen flüssig dosierbar sind. Überraschenderweise hat sich herausgestellt, daß die Zugabe des Kopplungsmittels in unverdünnter Form, d. h. im Zulauf, unter Rühren zu einer Ausbeutesteigerung führt. Daher wird das erfindungsgemäße Verfahren bevorzugt unter Zugabe des flüssigen Kopplungsmittels, tel quel, durchgeführt. Anschließend an die Kopplungsreaktion und zweckmäßigerweise noch vor der Isolierung des sternförmig verzweigten Polymerisates aus der Reaktionslösung können diese in der dem Fachmann bekannten Weise ggf. selektiv oder voll hydriert werden.

Die Isolierung der verzweigten Blockcopolymerisate aus der Reaktionslösung erfolgt in üblicher Weise, beispielsweise durch Ausfällen und Abfiltrieren des Polymerisats aus der Reaktionslösung.

Die nach dem erfindungsgemäßen Verfahren hergestellten Produkte können nach den bekannten Verfahren der Thermoplastverarbeitung direkt verarbeitet werden, also z. B. durch Extrudieren, Spritzgießen, Kalandrieren, Hohlkörperblasen, Pressen oder Sintern. Besonders bevorzugt ist die Herstellung von Formkörpern durch Spritzgießen und die von Verpackungsmitteln. Zur Herstellung dieser Formkörper und Verpackungsmittel ist es bevorzugt, die nach dem erfindungsgemäßen Verfahren hergestellten Produkte mit anderen Thermoplasten, insbesondere mit Standardpolystyrol in dem Fachmann bekannten Grenzen abzumischen. Dabei hat sich herausgestellt, daß die nach dem erfindungsgemäßen Verfahren hergestellten Produkte mit Polystyrolen höheren Molekulargewichts besser verarbeitbar sind als dies bei den Produkten vom Stand der Technik (vgl. (1) oder (2)) bekannt ist. Überraschenderweise zeigen auch Fertigteile derartiger Mischungen beim Tempern keine Trübung. Den nach dem erfindungsgemäßen Verfahren hergestellten Produkten können vor oder während der Verarbeitung ggf. übliche Zusatzstoffe beigemischt werden. Dasselbe gilt für die Herstellung von Abmischungen mit anderen Thermoplasten.

Als Zusatzstoffe kommen in Betracht: Stabilisatoren, Füllstoffe, Farbpigmente, äußere Gleitmittel, Weichmacher, Antistatika oder Treibmittel, die in den üblichen, dem Fachmann bekannten Mengen angewendet werden. Für die Erhöhung der Oberflächenqualität von extrudierten Folien werden z. B. als Außenschmiermittel Oktadecylalkohol, Butylstearat, Mikrohartwachs oder Acrawachs verwendet.

Die in den Beispielen und Vergleichsversuchen beschriebenen Parameter wurden wie folgt gemessen:

1. als Maß für das Molekulargewicht der Blockcopolymerisate ist die Viskositätszahl, gemessen in 0,5gew.-%iger Lösung in Toluol in 25°C angegeben. Bestimmt wird dabei das Gewichtsmittel des Molekulargewichts.
2. Die Schädigungsarbeit in [N.m] bestimmt nach DIN 53 453 am gespritzten Formkörper.
3. Die Schlagzähigkeit, $a_n$, in kJ/m$^2$ bestimmt nach DIN 53 413.

Die Erfindung wird nachstehend anhand von einem Beispiel und von Vergleichsversuchen näher erläutert. Alle darin angegebenen Teile und Prozente beziehen sich, sofern nichts anderes vermerkt ist, auf das Gewicht.

## Beispiel und Vergleichsversuche

Die nachstehend beschriebenen Versuche wurden in einem 1,5 m$^3$ fassenden Polymerisationskessel mit einer Gesamtmenge von 200 kg Monomeren durchgeführt. Als Lösungsmittel wurde stets Cyclohexan verwendet. Die Feststoffkonzentration betrug nach beendeter Polymerisation 25%. Als Kopplungsmittel wurde in allen Fällen epoxidiertes Leinsamenöl verwendet. Bei der Aufarbeitung des Reaktionsproduktes wurden 1,5 Teile Trinonylphosphit (Stabilisator) und 0,5 Teile tert.-Butyl-Phenol zugesetzt.

## Vergleichsversuch A

Beispiel 1 von (1) wurde in einem 6 l fassenden Druckreaktor durchgeführt.

Eine Nacharbeitung dieses Beispiels führte im 1,5 m$^3$ fassenden Polymerisationskessel ohne besondere Maßnahmen bezüglich der Wärmeabfuhr nach der ersten Polymerisationsstufe zu einer Temperatur von 90° C; am Ende der zweiten Stufe zu einer Temperatur von 120° C. Das Kopplungsmittel wurde nach Abkühlung mittels Mantelkühlung auf 90° C als eine 10%ige Lösung in Toluol auf einmal zugegeben. Am Reaktionsprodukt wurde die Viskositätszahl zu 75,6 (cm$^3$/g) gemessen. Die mechanischen Werte sind in der Tabelle zusammen mit den Werten der anderen Versuche in Abhängigkeit von der Spritztemperatur angegeben. Außerdem ist in der Tabelle in der Spalte unter der Rubrik »Homopolystyrol« der Anteil an Homopolystyrol in Gew.-% angegeben, der durch Abbruchreaktionen entsteht. Dieser Anteil bezieht sich auf das Gesamtprodukt und wurde durch selektive Extraktion mit einer Mischung aus Methylethylketon und Aceton bestimmt.

## Vergleichsversuch B

Beispiel 1 der DE-AS 1 959 922 wurde nachgearbeitet. Nach den Angaben der Anmelderin dürfte Beispiel 1 in einem ca. 15 l fassenden Autoklaven durchgeführt worden sein. Beim Nacharbeiten dieses Beispiels in dem 1,5 m$^3$ fassenden Polymerisationskessel wurde nach Beendigung der ersten Verfahrensstufe eine Endtemperatur von 96° C, nach der zweiten eine solche von 85° C und nach der dritten Stufe eine Temperatur von 125° C erreicht. Vor der Zugabe des verdünnten Kopplungsmittels wurde mittels Mantelkühlung auf 85° C abgekühlt. Die Viskositätszahl des erhaltenen Polymeren betrug 78,2 (cm$^3$/g).

## Beispiel 1

In diesem Beispiel wird das erfindungsgemäße Verfahren ohne Zugabe von vinylaromatischem Monomeren in der Verfahrensstufe b) beschrieben.

In einem 1,5 m$^3$ fassenden Polymerisationskessel, ausgerüstet mit einem Siedekühler, wurden unter Inertgasatmosphäre und Feuchtigkeitsausschluß 600 kg Cyclohexan und 60 kg Styrol mit n-Butyllithium bei 35° C bis zur einsetzenden Polymerisation ausgeführt. Anschließend wurden 2,0 Mol sec.-Butyllithium (als Lösung in Cyclohexan) zugegeben. Durch die einsetzende Polymerisation stieg die Innentemperatur auf 59° C an. Unter Einschaltung einer Vakuumsiedekühlung ließ man dann in 15 Minuten 40 kg Styrol bei 60° C zulaufen. Nach Beendigung der Polymerisation wurde durch Vakuumsiedekühlung auf eine Temperatur von ca. 40° C abgekühlt. Nach Zugabe von weiteren 2,26 Mol sec.-Butyllithium und einer Mischung aus 50 kg Styrol und 50 kg Butadien stieg die Innentemperatur innerhalb von 20 Minuten auf 98° C an. Unmittelbar nach Erreichen der Maximaltemperatur wurden 560 g epoxidiertes Leinsamenöl in flüssigem Zustand in 10 Minuten unter Rühren zudosiert und die Reaktionslösung anschließend auf Raumtemperatur abgekühlt. Nach der Stabilisierung wurde die Reaktionslösung aufgearbeitet. Die Viskositätszahl des erhaltenen Produkts wurde zu 78,5 (cm$^3$/g) bestimmt.

**0 046 862**

Vergleichsversuch C

Versuch C wurde analog Beispiel 1 durchgeführt. Das Kopplungsmittel wurde allerdings erst nach Abkühlung der Polymerisationslösung auf 70° C als 10%ige toluolische Lösung zugegeben. Die Viskositätszahl des erhaltenen Produktes betrug 73,1 (cm$^3$/g).

Aus der Tabelle folgt, daß die nach dem erfindungsgemäßen Verfahren erhaltenen Produkte ein besseres Eigenschaftsbild aufweisen.

Tabelle

| Vergleichs-Versuch | Beispiel | Homo-PS [%] | Spritz-temperatur °C | Schädigungs-arbeit N/m | Schlagzähigkeit kJ/m$^2$ |
|---|---|---|---|---|---|
| A | — | 14,7 | 300 | 13,5 | 26,4 |
| | | | 220 | 13,5 | 18,9 |
| | | | 240 | 12,6 | 15,2 |
| | | | 260 | 11,5 | 11,5 |
| | | | 280 | 11,2 | 8,7 |
| — | 1 | 5,9 | 200 | 27,8 | (0% Bruch) |
| | | | 220 | 24,5 | 24,3 |
| | | | 240 | 32,4 | 18,9 |
| | | | 260 | 32,4 | 14,6 |
| | | | 280 | 28,9 | 13,3 |
| B | — | 16,8 | 200 | 13,0 | 24,1 |
| | | | 220 | 13,5 | 18,1 |
| | | | 240 | 14,3 | 13,4 |
| | | | 260 | 14,6 | 10,1 |
| | | | 280 | 12,9 | 9,3 |
| C | — | 6,5 | 200 | 11,8 | 19,7 |
| | | | 220 | 11,6 | 16,4 |
| | | | 240 | 11,7 | 12,0 |
| | | | 260 | 11,6 | 11,8 |
| | | | 280 | 5,9 | 7,6 |

**Patentansprüche**

1. Verfahren zur Herstellung von verzweigten Blockcopolymerisaten aus 60 bis 95 Gew.-% eines monovinylaromatischen Monomeren und 40 bis 5 Gew.-% eines konjugierten Diens mit 4 bis 8 Kohlenstoffatomen durch Polymerisation der Monomeren in einem inerten Lösungsmittel in Gegenwart eines Monolithiumkohlenwasserstoffes als Initiator, wobei man in einer ersten Verfahrensstufe (a) 50 bis 80, ggf. höchstens 90 Gew.-% der Gesamtmenge an monovinylaromatische Verbindung in Gegenwart einer relativ geringen Menge des Monolithiumkohlenwasserstoffes bis zur praktisch vollständigen Umsetzung polymerisiert, und darauf in einer zweiten Verfahrensstufe (b) zu der Reaktionslösung nach Zugabe einer zusätzlichen Initiatormenge, die gleich oder größer als die ursprünglich eingesetzte Initiatormenge ist, ggf. weitere 1 bis 30 Gew.-% der Gesamtmenge des monovinylaromatischen Monomeren zusetzt, wobei die Summe der in der ersten und zweiten Verfahrensstufe zugesetzten Menge an monovinylaromatischen Monomeren höchstens 90 Gew.-% der Gesamtmenge an monovinylaromatischen Monomeren beträgt; und die in der zweiten Verfahrensstufe zugesetzten monovinylaromatischen Monomeren bis zur praktisch vollständigen Umsetzung polymerisiert, worauf in einer weiteren Verfahrensstufe (c) der Reaktionslösung die restlichen monovinylaromatischen Monomeren und das gesamte konjugierte Dien zumindest in einem überwiegenden Anteil als Mischung zugegeben und polymerisiert wird und schließlich nach praktisch vollständiger Umsetzung der Monomeren das Gemisch der erhaltenen linearen Blockcopolymerisate mit aktiven, endständigen Lithium-Kohlenstoff-Bindungen unter Rühren und unter Zugabe eines polyfunktionellen Kopplungsmittels miteinander unter Bildung verzweigter Blockcopolymerisate, koppelt, dadurch gekennzeichnet, daß man von der in der Verfahrensstufe (a) insgesamt umzusetzenden Menge an vinylaromatischen Monomeren 30—70 Gew.-% vorlegt und einen Anteil von 70—30 Gew.-% während der Polymerisation im Zulauf zugibt, derart, daß die Polymerisationstemperatur, die zu Beginn der Polymerisation im Bereich von 30 bis 40°C liegt bei gleichzeitiger Anwendung einer Rückflußkühlung im Bereich von 45 bis 70°C während der Verfahrensstufe (a) gehalten wird, daß man nach Beendigung des Zulaufs der Monomeren die Reaktionstemperatur mit Hilfe der Siedekühlung auf Werte im Bereich von 30 bis 40°C absenkt, bevor man zur Durchführung der Verfahrensstufe (b) oder (c) erneut Initiator zugibt, daß man, falls in der Verfahrensstufe (b) nur vinylaromatische Monomere zugegeben werden, das unter (a) beschriebene Temperaturprofil wählt, daß man ferner die Polymerisation von restlichen vinylaromatischen Monomeren und des konjugierten Diens so durchführt, daß die Reaktionstemperatur einen Bereich von 90 bis 110°C nicht übersteigt und daß sich die Reaktionstemperatur am Ende dieser Verfahrensstufe zwischen 90 und 110°C bewegt und daß man schließlich nach Beendigung der Polymerisation, bevorzugt ohne vorherige Abkühlung, ein geeignetes flüssiges Kupplungsmittel in unverdünnter Form zulaufen läßt.

2. Verwendung von verzweigten Blockcopolymerisaten, hergestellt gemäß Anspruch 1, zum Spritzgießen.

**Claims**

1. A process for the preparation of branched block copolymers of from 60 to 95% by weight of a monovinyl-aromatic monomer and from 40 to 5% by weight of a conjugated diene of 4 to 8 carbon atoms by polymerizing the monomers in an inert solvent in the presence of a monolithium-hydrocarbon as the initiator, in which, in a first process stage (a), from 50 to 80, or where necessary at most 90% by weight of the total amount of monovinyl-aromatic compound are polymerized to virtually complete conversion in the presence of a relatively small amount of the monolithium-hydrocarbon, and thereafter, in a second process stage (b), an additional amount of initiator, which is equal to or greater than the originally employed amount of initiator, is added to the reaction solution, after which, optionally, a further 1—30% by weight of the total amount of monovinyl-aromatic monomer is added, the sum of the amounts of monovinyl-aromatic monomer added in the first and second process stages being at most 90% by weight of the total amount of monovinyl-aromatic monomer, and any such monovinyl-aromatic monomer added in the second process stage is polymerized to virtually complete conversion, after which, in a further process stage (c), the remainder of the monovinyl-aromatic monomer and all of the conjugated diene are added, at least predominantly in the form of a mixture, and are polymerized, and finally, after virtually complete conversion of the monomers, the mixture of the resulting linear block copolymers, having active terminal lithium-carbon bonds, is subjected to coupling by the addition of a polyfunctional coupling agent, with stirring, to form branched block copolymers, characterized in that 30—70% by weight of the total amount of vinyl-aromatic monomer to be reacted in process stage (a) is initially charged and 70—30% by weight is added, in the feed, during the polymerization in such a way that the polymerization temperature, which at the start of the polymerization is from 30 to 40°C, is kept at from 45 to 70°C during stage (a) by simultaneously employing reflux cooling; after completion of the monomer feed the reaction temperature is lowered to 30—40°C by evaporative cooling before fresh initiator is added in order to carry out stage (b) or (c); if only vinyl-aromatic monomer is added in process stage (b), the same temperature profile as for stage (a) is employed; and furthermore the polymerization of the remaining vinyl-aromatic monomer and the conjugated diene is carried out in such a way that the reaction temperature does not exceed 90—110°C, and the reaction temperature at the end of this process stage is from 90 to 110°C; and finally, after completion of the polymerization, and preferably without prior cooling, a suitable liquid coupling agent is run undiluted into the reaction mixture.

2. The use of branched block copolymers, prepares as claimed in claim 1, for injection molding.

**Revendications**

1. Procédé de préparation de copolymères en blocs ramifiés à partir de 60 à 95% en poids d'un monomère monovinylaromatique et de 40 à 5% en poids d'un diène conjugué contenant 4 à 8 atomes de carbone par polymérisation des monomères dans un solvant inerte en présence d'un dérivé monohydrocarboné de lithium servant d'inducteur, dans lequel, dans un premier stade opératoire a), on polymérise jusqu'à conversion pratiquement complète 50 à 80 et le cas échéant 90% en poids au maximum de la quantité totale du composé monovinylaromatique en présence d'une quantité relativement faible du dérivé monohydrocarboné de lithium, puis, dans un deuxième stade opératoire b), après addition d'une quantité supplémentaire d'inducteur égale ou supérieure à la quantité d'inducteur mise en œuvre à l'origine, on ajoute éventuellement à la solution de réaction encore 1 à 30% en poids de la quantité totale du monomère monovinylaromatique, la somme des quantités de monomère monovinylaromatique ajoutées au premier et au deuxième stade opératoire représentant au maximum 90% du poids de la quantité totale de monomère monovinylaromatique, et on polymérise les monomères monovinylaromatiques ajoutés au deuxième stade opératoire jusqu'à conversion pratiquement complète, puis, dans un autre stade opératoire c), on ajoute à la solution de réaction le reste des monomères monovinylaromatiques et la totalité du diène conjugué au moins en proportion prépondérante à l'état de mélange et on les polymérise, et finalement, après conversion pratiquement complète des monomères, on couple le mélange des copolymères séquencés linéaires obtenus, présentant des liaisons terminales actives lithium-carbone, entre eux, sous agitation et avec adjonction d'un agent couplant polyfonctionnel, avec formation de copolymères en blocs ramifiés, caractérisé en ce que, sur la quantité de monomère vinylaromatique à faire réagir au total au stade opératoire a), on introduit 30 à 70% en poids dans l'appareil et on introduit une proportion de 70 à 30% en poids dans l'alimentation au cours de la polymérisation en veillant à ce que la température de polymérisation qui, au début de la polymérisation, se situe dans l'intervalle de 30 à 40°C, reste dans l'intervalle de 45 à 70°C dans le cours du stade opératoire a) par application simultanée d'un refroidissement au reflux, en ce que, après la fin de l'addition des monomères, on maintient la température de réaction à des niveaux dans l'intervalle de 30 à 40°C par le refroidissement à l'ébullition avant d'ajouter à nouveau de l'inducteur pour la mise en œuvre du stade opératoire b) ou c), en ce que si, dans le stade opératoire b), on a ajouté uniquement des monomères vinylaromatiques, on respecte le profil de température décrit sous a), et en outre en ce que, on procède à la polymérisation du restant des monomères vinylaromatiques et du diène conjugué en veillant à ce que la température de réaction ne dépasse pas un intervalle de 90 à 110°C et que, à la fin de ce stade opératoire, la température de réaction se situe entre 90 et 110°C, et en ce que finalement, après la fin de la polymérisation, de préférence sans refroidissement préalable, on ajoute un agent couplant liquide approprié à l'état non dilué.

2. Utilisation des copolymères en blocs ramifiés préparés selon la revendication 1 pour le moulage par injection.